# EUROPEAN PATENT SPECIFICATION

(11) **EP 2 202 013 B1**
(45) Date of publication and mention of the grant of the patent: **10.08.2011**
(21) Application number: 09177818.3
(22) Date of filing: 03.12.2009
(51) Int. Cl.: B21K 1/10, B21K 21/12

(54) **Method for extruding a rotor shaft for a wind turbine generator**
Verfahren zum Extrudieren einer Rotorwelle für einen Windturbinengenerator
Procédé d'extrusion d'un arbre de rotor pour générateur d'éolienne

(30) Priority: 17.12.2008 US 337335
(43) Date of publication of application: 30.06.2010
(73) Proprietor: General Electric Company, Schenectady, NY 12345 (US)
(72) Inventor: Mathai, Manu, 560066, Bangalore, Karnataka (IN); Bhat, Thirumaleshwara, Greenville, SC 29615 (US)
(74) Representative: Bedford, Grant Richard

(56) References cited:
- FR-A- 1 573 668
- SU-A1- 874 255

## Description

The field of the invention relates to extrusion for manufacturing rotor shafts for wind turbine generators.

Wind turbine generators use wind energy to generate electricity and typically include a tower, a nacelle mounted on the tower, and a hub and blade assembly connected to the nacelle. Wind causes the hub and blade assembly to rotate with respect to the nacelle thereby creating mechanical energy that is converted by a generator into useable electrical energy. A rotor shaft, which is often hollow, is used to couple the hub and blade assembly to the generator.

Currently, wind turbine rotor shafts are manufactured through an open die forging process. In this process, raw material, which is commonly in the form of a cylindrical metal billet, is heated and shaped between a pair of dies. One of the dies is often attached to a ram and the other die is often attached to a hammer. Using the ram and hammer, the billet is gradually shaped into the desired configuration through hammering and/or pressing between the dies. In the open die forging process, the metal billet is never completely confined or restrained between the dies.

Commonly, rotor shafts for wind turbine generators have complex shapes including multi-steps (e.g., five or more) along its lengths and a flange at one of its ends. The flange typically includes holes for bolting the shaft to another component of the wind turbine generator. Thus, the outer diameter of the rotor shafts varies at numerous locations along its length. To achieve these various outer diameters using open die forging, a substantial amount of material is removed from the billet using the dies. In addition, a central bore is often drilled through the billet so that the resulting rotor shaft is hollow.

The open die forging and drilling method used to manufacture conventional rotor shafts results in a considerable amount of material being removed from billet (e.g., 20 to 30 percent of the original mass). As a result, a significant amount of the original billet is wasted. In addition, removal of billet material using the forging die and drill takes a considerable amount of time. Moreover, rotor shafts formed using the open die forging process often have less than optimum residual stress profiles as a result of the stresses (e.g., bending, compression, and tension) placed on the billet during the process. Flanged hollow shafts can also be manufactured by extrusion, as disclosed in SU-A-874255, using a die comprising a body, a mandrel, a punch and a radical extrusion insert.

In one aspect according to the present invention, a method for manufacturing a rotor shaft for a wind turbine generally comprises heating a metallic material to a temperature suitable for extruding. The heated metallic material is extruded by driving the metallic material into a die using a punch. The heated metallic material is driven in a first direction generally axial of the die and in a second direction generally radial to the axial direction of the die. The metallic material is allowed to cool.

The extrusion die generally comprises a body and a mandrel received in the body. The mandrel and body cooperatively define a tubular interior chamber. A punch is received in the tubular interior chamber and moveable with respect to body and mandrel. A radial extrusion insert has a radial interior chamber in communication with the tubular interior chamber. The radial extrusion insert comprises an arcuate edge disposed in a transition area between the tubular interior chamber and the radial interior chamber.

Thus, an extruded rotor shaft for a wind turbine generator generally comprising a tubular stem and a flange extending radially outward from the tubular stem, and being in a residual compressive stress state throughout its entirety, can be obtained.

Various aspects and embodiments of the present invention will now be described in connection with the accompanying drawings, in which:
Figure 1 is a perspective view of a wind turbine generator.
Figure 2 is an enlarged, fragmentary perspective view of the wind turbine generator of Figure 1 with portions broken away to show internal components.
Figure 3 is a perspective view of a rotor shaft of the wind turbine generator.
Figure 4 is a side view of the rotor shaft of Figure 3.
Figure 5 is an end view of the rotor shaft.
Figure 6 is a cross-section of the rotor shaft taken along line 6-6 of Figure 5.
Figure 7 is a cross-section of a container die having a cylindrical billet received in a container thereof and a disk punch of the container die being in its starting position.
Figure 8 is a cross-section similar to Figure 7 but showing the disk punch of the container die moved from its starting position to an intermediate position to thereby move the cylindrical billet into a body of the container die to form a tubular billet.
Figure 9 is a cross-section similar to Figures 7 and 8 showing the disk punch of the container die in its finished position and the cylindrical billet being transformed into the tubular billet.
Figure 10 is a cross-section of a radial extrusion die having the tubular billet received therein and a ring punch of the radial extrusion die being in its starting position.
Figure 11 is an enlarged cross-section of the radial extrusion die of Figure 10 showing a radial extrusion insert of the radial extrusion die.
Figures 12-16 are cross-sections similar to Figure 11 but showing various stages of the tubular billet being driven into the radial extrusion insert by the ring punch.
Figure 17 is a cross-section of the radial extrusion die of Figure 10 with a shrink ring covering the radial extrusion die.

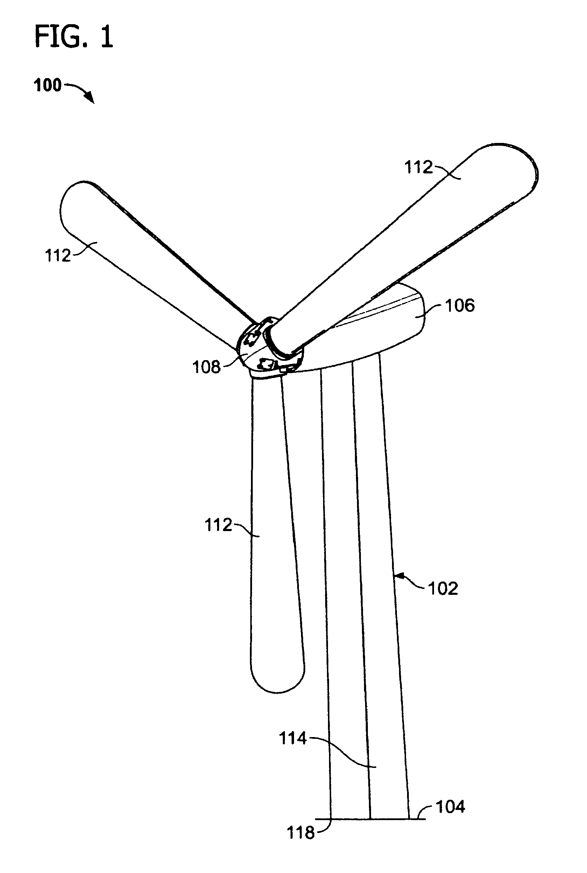

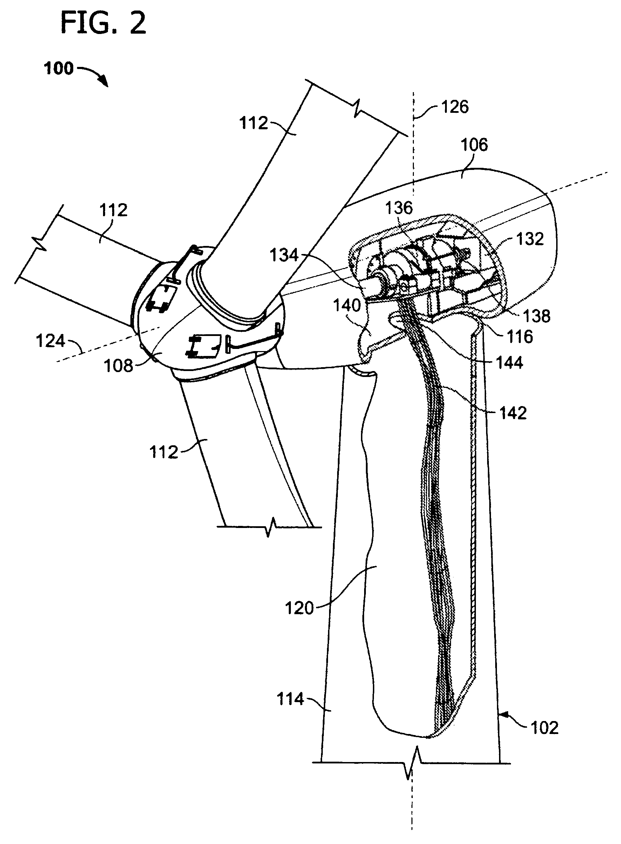

Figures 1 and 2 illustrate an exemplary horizontal axis wind turbine generator 100 having a tower 102 extending from a supporting surface 104, a nacelle 106 mounted on the tower 102, and a blade and hub assembly 108 coupled to the nacelle 106. The blade and hub assembly 108 includes a plurality of blades 112 mounted thereto. In the exemplary embodiment, the blade and hub assembly 108 has three blades 112, but it is understood that the blade and hub assembly 108 may include more or less than three blades 112. The tower 102, which in the exemplary embodiment is tubular, includes a sidewall 114, a top 116, a bottom 118, and a passageway 120 that extends from the bottom 118 to the top 116. Thus, the passageway 120 in the tower 102 extends between the supporting surface 104 and the nacelle 106. It is contemplated that other types of wind turbine generators (e.g., vertical axis wind turbine generators) can be used without departing from the scope of this invention.

The blades 112 are spaced about the blade and hub assembly 108 to facilitate rotating the blade and hub assembly to transfer kinetic energy from the wind into usable mechanical energy, and subsequently, electrical energy. More specifically, as the wind strikes the blades 112, the blade and hub assembly 108 is rotated about its rotational axis 124. Preferably, the blades 112 are positioned such that they face into the wind. Since the wind direction readily changes, the blades 112, and thereby the nacelle 106, need to be able to rotate with respect to the tower 102 so that the blades can remain substantially facing into the wind. That is, by rotating the nacelle 106, the blades can be rotated such that the wind direction is generally parallel to the rotational axis 124 to maximize the amount of wind striking the blades. As such, the nacelle 106 and blades 112 can rotate with respect to the tower 102 about a rotational axis 126 that is generally transverse to the blade and hub assembly rotational axis 124 and that is substantially coaxial with a longitudinal axis of the tower 102.

Figure 2 illustrates some of the components housed in the nacelle 106. In the exemplary embodiment, such components include a low speed rotor shaft 134 (or main shaft) coupled to the blades 112, a gearbox 136, a high speed shaft 138, and an electric generator 132. Rotation of the blades 112 causes the low speed rotor shaft 134 to rotatably drive the gearbox 136, which in turn, rotates high speed shaft 138. The high speed shaft 138 rotatably drives generator 132, which produces electrical power. Thus, the nacelle 106 houses the generator 132 and associated components of the wind turbine generator 100. The nacelle 106 includes a platform 140 on which the generator 132 and the other components (e.g., the low speed rotor shaft 134, the gearbox 136, the high speed shaft 138) are mounted. It is understood that the generator 132 and associated components can be different than those illustrated herein without departing from the scope of this invention.

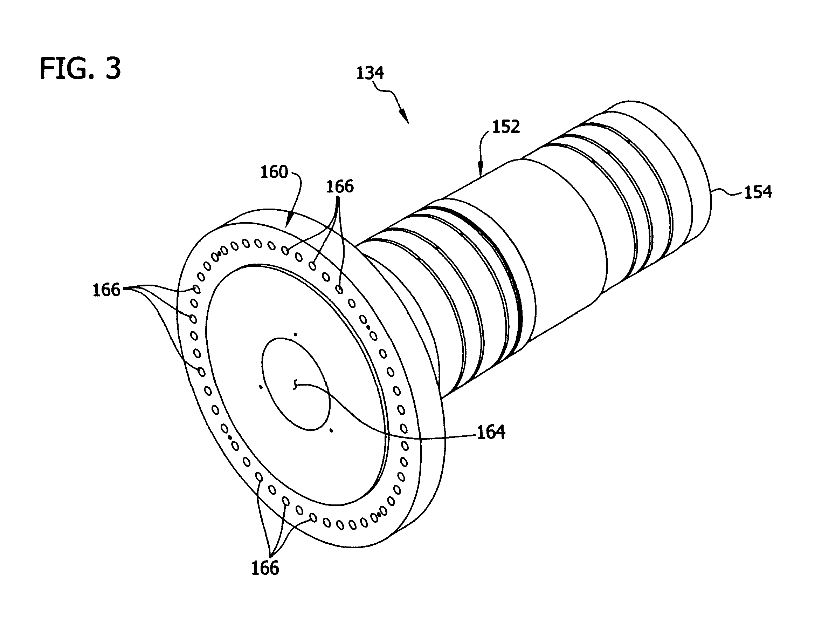

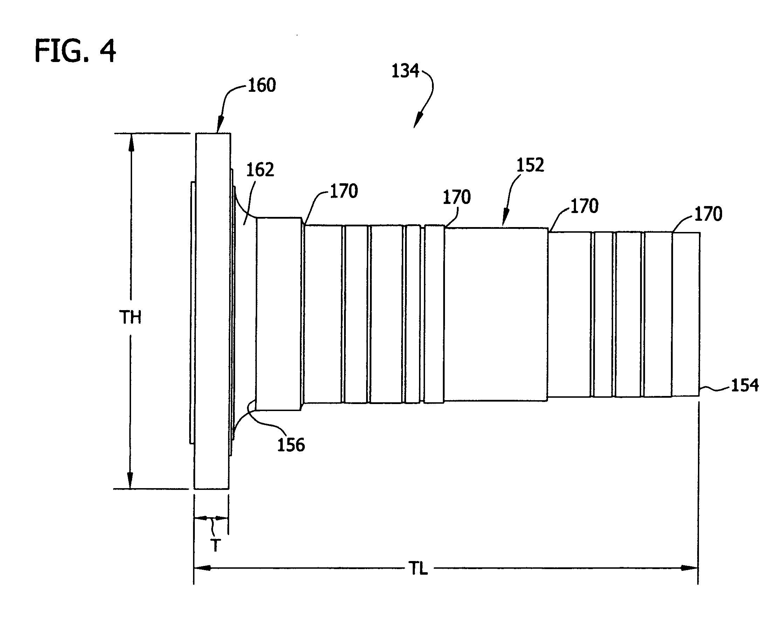

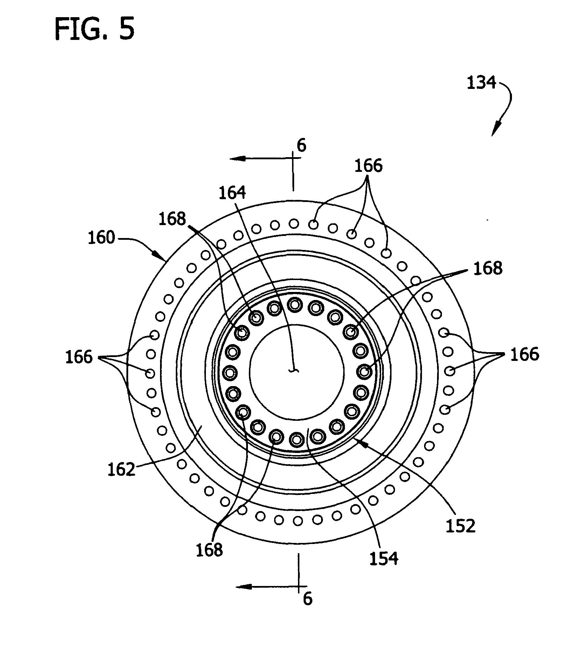

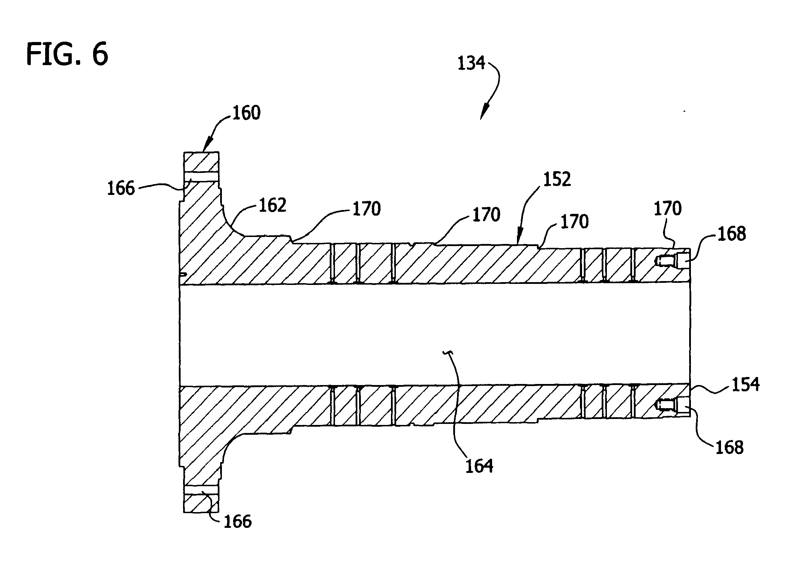

Figures 3-6 illustrate the rotor shaft 134 removed from the wind turbine generator 100. In the illustrated exemplary embodiment, the rotor shaft includes a tubular stem 152 having longitudinal ends 154, 156 and a flange 160 integrally formed with the stem at one of its ends. As best illustrated in Figure 4, a curved transition zone 162 is located between the stem 152 and the flange 160 of the rotor shaft 134. The tubular stem 152, which is generally cylindrical, and flange 160 cooperatively define a central bore 164 that extends longitudinally through the stem and flange. The flange 160 includes a plurality of radially spaced holes 166 extending therethrough for coupling the rotor shaft 134 to other components of the wind turbine generator 100 (Figure 5). A plurality of radial spaced holes 168 is also located in the free end 154 of the stem 152 for the same purpose: to couple the rotor shaft 134 to other components of the wind turbine generator 100.

In one exemplary embodiment and as illustrated in Figure 4, the rotor shaft 134 has a total length TL of approximately 2,220 mm, a total height TH of approximately 1,500 mm (as defined by a diameter of the flange 160), and a total weight exceeding 7,100 kilograms. The flange 160 has a thickness T of approximately 150 mm. The stem 152 has diameter of approximately 700 mm at its free end 154 and approximately 814 at its end 156 coupled to the flange 160 via the transition zone 162. As a result, the stem 152 slightly tapers along its length from one end to the other. In addition, a plurality of steps 170 is located along the length of the stem 152. The steps 170 define rather abrupt changes in the diameter of the stem 152. The illustrated rotor shaft 134 includes four steps but it is understood that the rotor shaft can have more or fewer steps 170 without departing from the scope of this invention. The bore 164 extending longitudinally through the center of the illustrated rotor shaft 134 has a diameter greater than 300 millimeters. It is understood that the rotor shaft 134 can have different sizes and shapes than those described herein without departing from the scope of this invention.

Rotor shaft 134 can be manufactured from any suitable material. In one embodiment, the rotor shaft 134 is manufactured from a steel alloy, e.g., 34CrNiMo6. It is also understood that the rotor shaft 134 can be painted or otherwise treated to protect against corrosion.

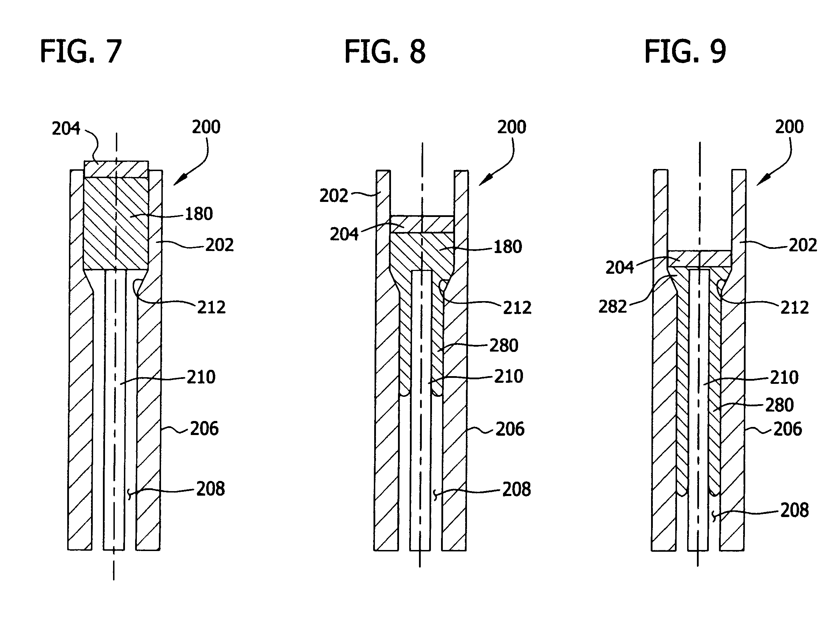

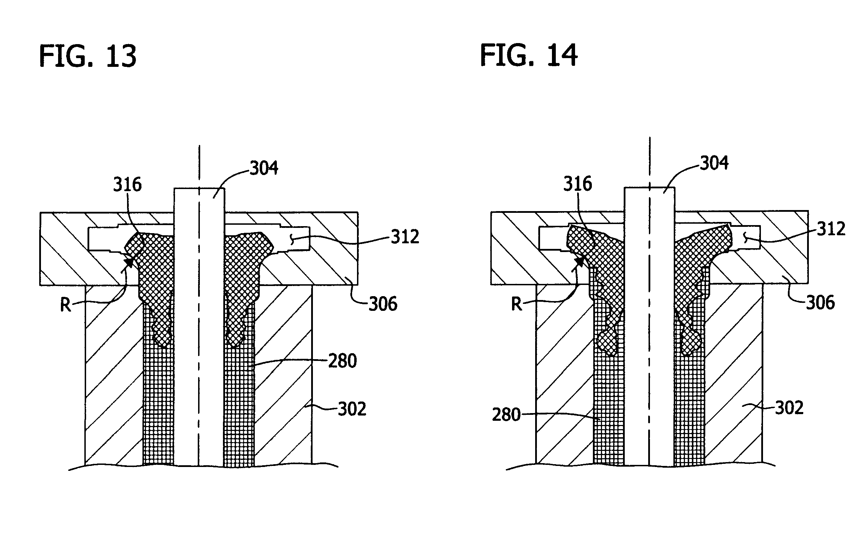

One method of manufacturing the rotor shaft 134 of the wind turbine generator 100 is illustrated in Figures 7-16. In this embodiment, a generally cylindrical billet 180 of suitable material is placed into a container extrusion die 200. More particularly, the billet 180 is placed into a container 202 of the container extrusion die 200 and heated to a suitable extrusion temperature, e.g., approximately 1,232°C (2,250 degrees Fahrenheit °F). In one embodiment, the billet 180 is approximately 1,250 m³ (49,200 cubic inches in³) of a suitable metallic material, such as but not limited to 34CrNiMo6, which is a steel alloy. It is understood that the volume of the billet 180 is directly dependent on the size of the rotor shaft 134 being manufactured and will vary accordingly. It is also understood that any suitable extrusion temperature can be used.

Once the billet 180 is heated to the suitable extrusion temperature, a disk punch 204 is used to push the heated metallic material from the container 202 into a body 206 the container extrusion die 200. As seen in Figures 7-8, the container extrusion die 200 includes a tubular interior chamber 208 defined by the body 206 and a mandrel 210. In one suitable embodiment, the disk punch 204 drives the billet 180 (i.e., the heated metallic material) into the tubular interior chamber 208 of the container extrusion die 200 at a rate of about 0,127 mm per second (0.005 inches per second in/sec). Figure 7, for example, illustrates the disk punch 204 in its starting position. Figure 8 illustrates the disk punch 204 at an intermediate position wherein the disk punch has driven some of the heated metallic material defining the billet 180 from the container 202 into the tubular interior chamber 208 to form part of a tubular billet 280. Figure 9 illustrates the disk punch 280 at its finished position wherein the tubular billet 280 has been formed.

In the illustrated embodiment, the container 202 of the container extrusion die 200 has a larger inner diameter than the tubular interior chamber 208. As a result, the container extrusion die 200 includes a tapered portion 212 disposed between the container 202 and the tubular interior chamber 208. In the illustrated embodiment, the tapered portion 212 funnels the heated metallic material defining the billet 180 from the container 202 into the tubular interior chamber 212. In one suitable embodiment, the tapered portion 212 has an angle of about 25 degrees. It is understood that the tapered portion 212 can different angles or can be omitted. That is, the container 202 and the tubular interior chamber 212 can have the same inner diameters.

After its formation, the tubular billet 280 is removed from the container extrusion die 200, allowed to cool, and then machined to remove a flared portion 282 adjacent one of its ends. The flared portion 282 is a byproduct of the tapered portion 212 of the container 202 of the container extrusion die 200. In one exemplary embodiment, less than about 10% and more suitable less than about 5% of the total material mass of the tubular billet 280 is removed by the machining process. It is contemplated that other configurations of the container 202 of the container extrusion die 200 can be used to prevent the formation of the flared portion 282 of the tubular billet 280 and thereby eliminate machining of the tubular billet.

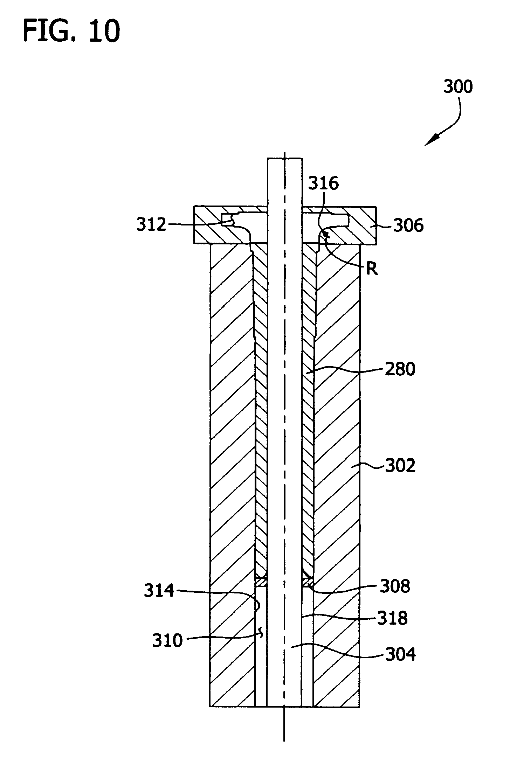

As seen in Figure 10, the tubular billet 280 is loaded into a radial extrusion die 300 having a die body 302, a mandrel 304 received in the die body, a radial extrusion insert 306, and a ring punch 308. The die body 302 and mandrel 304 cooperatively define a tubular interior chamber 310 of the radial extrusion die 300 in which the tubular billet 280 is received. The ring punch 308 is movable within the tubular interior chamber 310 relative to the die body 302 and mandrel 304 to drive the tubular billet 280 through the radial extrusion die 300 and into the radial extrusion insert 306. The radial extrusion insert 306 includes a radial interior chamber 312 that is in communication with and extends radially outward from the tubular interior chamber 310.

In one embodiment and as illustrated in the accompanying drawings, the radial extrusion insert 306 is removably coupled to the die body 302. As a result, different radial extrusion inserts can be selectively coupled to the die body 302 to manufacture rotor shafts having different shapes and sizes. It is understood, however, that the radial extrusion insert 306 can be formed integral with the die body 302.

The tubular interior chamber 310 of the die body 302 and the radial interior chamber 312 of the radial extrusion insert 306 cooperatively correspond to the general shape and size of the finished rotor shaft 134. To facilitate this, an inner surface 314 of the radial extrusion die 300 is slightly tapered and includes surface features 316 that correspond to the taper and steps 170 of the rotor shaft 134. An annular arcuate edge 316 defined by the inner surface 314 of the radial extrusion die 300 and is disposed in a transition area between the tubular interior chamber 310 and the radial interior chamber 312. In one exemplary embodiment, the arcuate edge 316 has a radius R between about approximately 38 mm (1.5 inches) and about approximately 63.5 mm (2.5 inches), and suitably about approximately 51 mm (2 inches).

In one exemplary embodiment of using the radial extrusion die 300, the tubular billet is heated to approximately 1232°C (2250°F) and driven through the tubular interior chamber 310 and into the radial interior chamber 312 using the ring punch 308. The ring punch 308 is driven through the tubular interior chamber 310 at a velocity in the range of about 0,254 mm per second (0.01 inches per second in/sec) and about 1,27 mm per second (0.05 in/sec). The coefficient of dynamic friction between the tubular billet 280 and the inner surface 314 of the radial extrusion die 300 and the coefficient of dynamic friction between the tubular billet and an outer surface 318 of the mandrel 304 are suitably maintained in a range between about 0.25 and about 0.3. Suitable lubricants can be used to manage the coefficient of dynamic friction between the outer surface 318 of the mandrel 304, the inner surface 314 of the radial extrusion die 300, and the tubular billet 280.

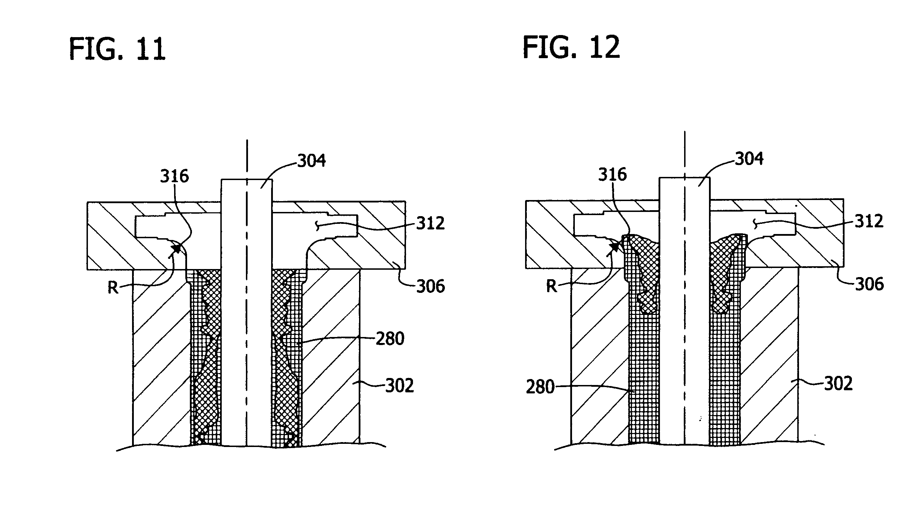

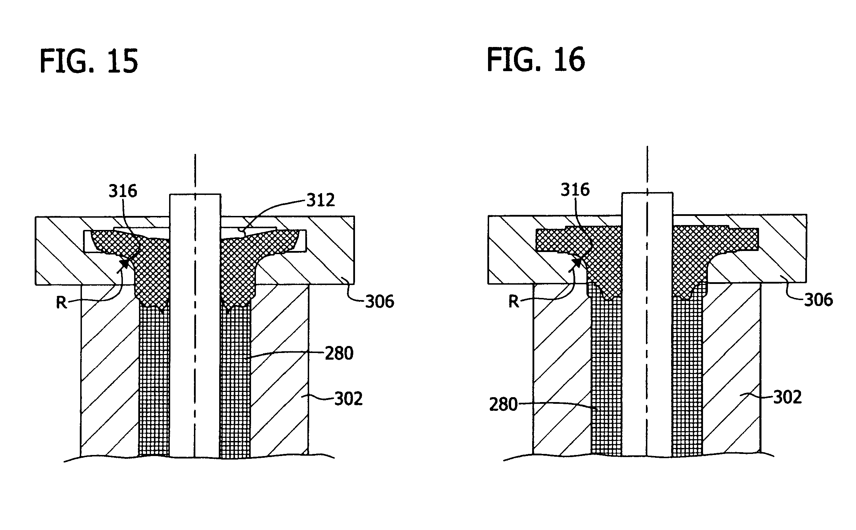

Figures 10-16, which are cross-sections, illustrate the tubular billet 280 being driven by movement of the ring punch 308 axially through the tubular interior chamber 310 of the die body 302 and radially into the radial interior chamber 312 of the radial extrusion insert. As illustrated by the cross-hatching in Figures 11-16, the tubular billet 280 is subjected to relatively large compressive forces. For example, in one exemplary embodiment, the tubular billet 280 is subjected to a press load of approximately 1.6 Kton near the end of the radial extrusion process, which is illustrated in Figure 16. As a result, the radial and axial stress distributions at end of the radial extrusion process are in a favorable compressive stress state in all the directions. The compressive stresses throughout the tubular billet 280 were estimated to be between about -158 mPa (-23.1 Ksi) to about 11.45 mPa (+1.66 Ksi) using a suitable simulation program (DEFORM). The maximum plastic strains imparted the radial and axial directions of the tubular billet 280 were estimated to be about 17 mPa (2.47 Ksi) and 11mPa (1.57 Ksi) respectively. Due to the high compressive stress and high plastic strains induced without any material defect due to the process, the material properties and microstructure of the extruded rotor shaft 134 are substantially improved.

At the completion of the radial extrusion process, the tubular billet 280 has been transformed substantially into the rotor shaft 134. The rotor shaft 134 is allowed to cool and is removed from the radial extrusion die 300. It is understood that some finishing machining processes may be needed (e.g., drilling the holes 166 in the flange 160 and the holes 168 in the free end 154 of the stem 152). It is also understood that the rotor shaft 134 may be subjected to additional finishing process, e.g., polishing, painting.

The radial extrusion process described above introduces a residual compressive stress state throughout the resulting rotor shaft 134. In other words, the radial extrusion process effects the microstructure and grain distribution of the rotor shaft 134, which provides for a structurally sound and durable rotor shaft.

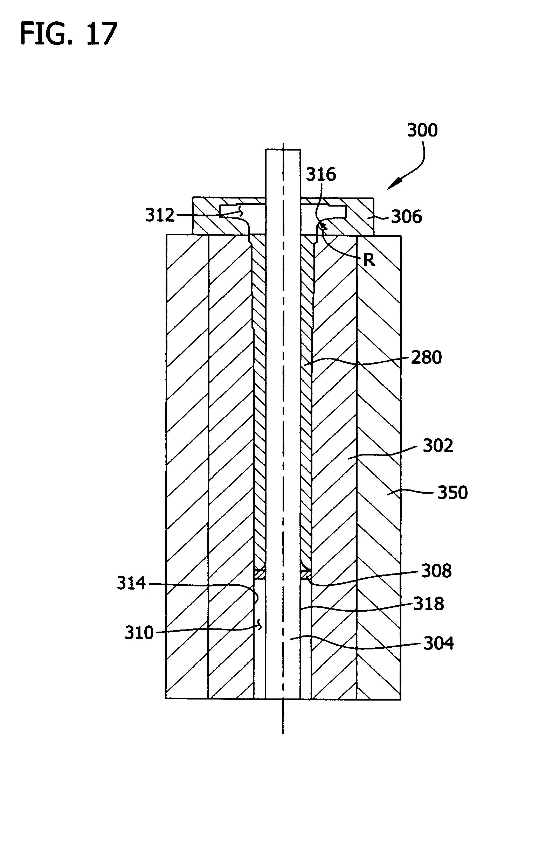

Figure 17 is a cross-section illustrating the radial extrusion die 300 shown in Figure 10 with a shrink ring 350. The shrink ring 350 reduces the pressure exerted on radial extrusion die 300 during the extrusion process thereby increasing the life and reliability of the radial extrusion die.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method for manufacturing a rotor shaft (134) for a wind turbine, the rotor shaft (134) including a tubular stem (152) and a flange (160) integrally formed with the stem (152), using an extrusion die (300) comprising:
a body (206);
a mandrel (210) received in the body, the mandrel and body cooperatively defining a tubular interior chamber (310);
a punch (308) received in the tubular interior chamber and moveable with respect to the body and the mandrel; and
a radial extrusion insert (306) having a radial interior chamber in communication with the tubular interior chamber, the radial extrusion insert comprising an annular arcuate edge (316) disposed in a transition area between the tubular interior chamber and the radial interior chamber (312), the method comprising:
heating a metallic material to a temperature suitable for extruding;
extruding the metallic material by driving the heated metallic material into the die (300) using the punch (308), the heated metallic material being driven in a first direction generally axial of the die (300) and in a second direction generally radial to the axial direction of the die (300); and
allowing the metallic material to cool.

2. The method as set forth in Claim 1, further comprising driving the heated metallic material around the annular arcuate edge (316).

3. The method as set forth in Claim 1 or 2, wherein extruding the metallic material by driving the heated metallic material through the die (300) using the punch (308) comprises moving the punch (308) through the die (300) at a rate between about 0.254 mm per second (0.001 inches per second) and about 1.27 mm per second (0.05 inches per second).

4. The method as set forth in any of Claims 1 to 3, further comprising maintaining a coefficient of dynamic friction between the metallic material and die (300) in a range between about 0.25 and about 0.3 while the metallic material is being driven through the die (300) by the punch (308).

5. The method as set forth in any of Claim 1 to 4, wherein heating the metallic material to a temperature suitable for extruding comprises heating the metallic material to approximately 1232 °C (2250°F).

6. The method as set forth in any of Claims 1 to 5, wherein extruding the metallic material causes compressive stress to be applied throughout the metallic material.

7. The method as set forth in any of claims 1 to 6, wherein extruding the metallic material imparts plastic strain throughout the metallic material.

## Patentansprüche

1. Verfahren zum Herstellen einer Rotorwelle (134) für eine Windkraftanlage, wobei die Rotorwelle (134) einen rohrförmigen Schaft (152) und einen in einem Stück mit dem Schaft (152) unter Anwendung einer Extrusionsformwerkzeug (300) ausgebildeten Flansch (160) enthält, welche aufweist:
einen Körper (206);
einen in dem Körper aufgenommenen Dorn (210), wobei der Dorn und der Körper zusammenwirkend eine ringförmige Innenkammer (310) ausbilden;
einen in der ringförmigen Innenkammer aufgenommenen und in Bezug auf den Körper und den Dorn beweglichen Stempel (308);
einen radialen Extrusionseinsatz (306) mit einer radialen Innenkammer in Verbindung mit der rohrförmigen Innenkammer, wobei der radiale Extrusionseinsatz eine ringförmige bogenartige Kante (316) aufweist, die in einem Übergangsbereich zwischen der rohrförmigen Innenkammer und der radialen Innenkammer (312) angeordnet ist, wobei das Verfahren die Schritte aufweist:
Erwärmen eines metallischen Materials auf eine für Extrusion geeignete Temperatur;
Extrudieren des metallischen Materials, indem das erhitzte metallische Material unter Verwendung des Stempels (308) in die Form (300) gedrückt wird, wobei das erhitzte metallische Material in eine erste Richtung im Wesentlichen axial zu dem Formwerkzeug (300) und in eine zweite Richtung im Wesentlichen radial zu der axialen Richtung des Formwerkzeugs (300) gedrückt wird; und
Zulassen einer Abkühlung des metallischen Materials.

2. Verfahren nach Anspruch 1, ferner mit dem Schritt des Drückens des erwärmten metallischen Materials um die ringförmige bogenartige Kante (316).

3. Verfahren nach Anspruch 1 oder 2, wobei die Extrusion des metallischen Materials durch Drücken des erhitzten metallischen Materials durch das Formwerkzeug (300) unter Verwendung des Stempels (308) den Schritt der Bewegung des Stempels (308) durch das Formwerkzeug (300) mit einer Geschwindigkeit zwischen etwa 0,254 mm pro Sekunde (0,01 Inches pro Sekunde) und etwa 1,27 mm pro Sekunde (0,05 Inches pro Sekunde) aufweist.

4. Verfahren nach einem der Ansprüche 1 bis 3, ferner mit dem Schritt der Aufrechterhaltung eines Gleitreibungskoeffizienten zwischen dem metallischen Material und dem Formwerkzeug (3) in einem Bereich zwischen etwa 0,25 und etwa 0,3, während das metallische Material von dem Stempel (308) durch das Formwerkzeug (300) gedrückt wird.

5. Verfahren nach einem der Ansprüche 1 bis 4, wobei die Erwärmung des metallischen Materials auf eine für Extrusion geeignete Temperatur den Schritt der Erwärmung des metallischen Materials auf 1232 °C (2250 °F) aufweist.

6. Verfahren nach einem der Ansprüche 1 bis 5, wobei die Extrusion des metallischen Materials die Aufbringung einer Druckspannung durch das gesamte metallische Material bewirkt.

7. Verfahren nach einem der Ansprüche 1 bis 6, wobei die Extrusion des metallischen Materials dem gesamten metallischen Material eine plastische Verformung verleiht.

## Revendications

1. Procédé de fabrication d'arbre (134) de rotor pour éolienne, l'arbre (134) de rotor comprenant une tige tubulaire (152) et une bride (160) faisant corps avec la tige (152), à l'aide d'une filière d'extrusion (300) comprenant :
un corps (206) ;
un mandrin (210) reçu dans le corps, le mandrin et le corps coopérant pour définir une chambre intérieure tubulaire (310) ;
un poinçon (308) reçu dans la chambre intérieure tubulaire et mobile par rapport au corps et au mandrin ; et
un élément d'extrusion rapporté radial (306) ayant une chambre intérieure radiale qui communique avec la chambre intérieure tubulaire, l'élément d'extrusion rapporté radial comportant une bord annulaire arqué (316) disposé dans une zone de transition entre la chambre intérieure tubulaire et la chambre intérieure radiale (312), le procédé comprenant des étapes de :
chauffage d'une matière métallique à une température propice pour l'extrusion ;
extrusion de la matière métallique en entraînant la matière métallique chauffée pour la faire entrer dans la filière (300) à l'aide du poinçon (308), la matière métallique chauffée étant entraînée dans une première direction globalement axiale de la filière (300) et dans une seconde direction globalement radiale par rapport à la direction axiale de la filière (300) ; et
refroidissement de la matière métallique, sans intervention.

2. Procédé selon la revendication 1, comprenant en outre la venue, par entraînement, de la matière métallique chauffée autour du bord annulaire arqué (316).

3. Procédé selon la revendication 1 ou 2, dans lequel l'extrusion de la matière métallique par entraînement dans la filière (300), à l'aide du poinçon (308), de la matière métallique chauffée comporte l'actionnement du poinçon (308) dans la filière (300) à une vitesse d'environ 0,254 mm/seconde (0,01 pouce/seconde) à environ 1,27 mm/seconde (0,05 pouce/seconde).

4. Procédé selon l'une quelconque des revendications 1 à 3, comprenant en outre le maintien d'un coefficient de frottement dynamique entre la matière métallique et la filière (300) à une valeur d'environ 0,25 à environ 0,3 pendant que la matière métallique est entraînée dans la filière (300) par le poinçon (308).

5. Procédé selon l'une quelconque des revendications 1 à 4, dans lequel le chauffage de la matière métallique à une température propice pour l'extrusion comporte le chauffage de la matière métallique à environ 1232°C (2250°F).

6. Procédé selon l'une quelconque des revendications 1 à 5, dans lequel l'extrusion de la matière métallique provoque l'application d'une contrainte de compression à toute la matière métallique.

7. Procédé selon l'une quelconque des revendications 1 à 6, dans lequel l'extrusion de la matière métallique communique une déformation plastique à toute la matière métallique.
